# EUROPÄISCHE PATENTANMELDUNG

(11) **EP 1 338 203 A1**
(43) Veröffentlichungstag der Anmeldung: **27.08.2003**
(21) Anmeldenummer: 02004116.6
(22) Anmeldetag: 25.02.2002
(51) Int. Cl.: A21C 9/06

(54) **Teigformmaschine mit einer Druckrolle für Backwaren aus einem mehrschichtigen Teigmaterial**

(71) Anmelder: Palásti, Jozsef, 6115 Kunszállás (HU)
(72) Erfinder: Palásti, Jozsef, 6115 Kunszállás (HU)
(74) Vertreter: Glawe, Delfs, Moll & Partner

(57) **Zusammenfassung**

Teigformmaschine für Backstücke aus einem Teigmaterial (3), das mindestens zwei Teigschichten und eine dazwischen liegende Füllungsschicht umfaßt, mit einer Arbeitsfläche (1) zum Auflegen des Teigmaterials (3), einer Druckrolle (90) zum Zusammendrücken von einer oder mehreren Lagen (30, 32) des Teigmaterials (3) und Antriebsmitteln zum Erzeugen einer Relativbewegung zwischen der Arbeitsfläche (1) und der Druckrolle (90), wobei die Druckrolle (90) auf ihrer Umfangsfläche Vertiefungen (91) und Erhebungen (92) aufweist, die in Umfangsrichtung abwechselnd nacheinander angeordnet sind. Ferner beschrieben ist ein Verfahren zum Verbinden von einer unteren (30) und einer oberen (32) Lage Teigmaterials (3), das aus mindestens zwei Teigschichten und einer dazwischen liegenden Füllungsschicht besteht, mittels einer Druckrolle, deren Umfangsfläche Vertiefungen und Erhebungen aufweist.

## Beschreibung

Die Erfindung betrifft eine Teigformmaschine für Backwaren aus einem Teigmaterial, das mindestens zwei Teigschichten und eine dazwischen liegende Füllungsschicht umfaßt, mit einer Arbeitsfläche zum Auflegen des Teigmaterials, einer Druckrolle zum Zusammendrücken von einer oder mehreren Lagen des Teigmaterials und Antriebsmitteln zum Erzeugen einer Relativbewegung zwischen der Arbeitsfläche und der Druckrolle.

Bei der Herstellung von Backwaren werden häufig Teigarten verwendet, die aus mehreren Schichten aufgebaut sind, wie z. B. Blätterteig. Diese Teigarten zeichnen sich dadurch aus, daß zwischen zwei Teigschichten eine Füllungsschicht angeordnet ist. In der Regel geschieht dies dadurch, daß auf einer ausgebreiteten unteren Schicht eine Füllungsmasse, wie bspw. Margarine, dünn aufgetragen ("abgezogen") wird und darauf eine weitere Teigschicht gelegt wird. Auf diese Weise hergestellte Teige werden daher auch als gezogene Teige bezeichnet. Eine besondere Eigenschaft dieser gezogenen Teige ist es, daß sie bei dem Backen nicht nur aufgrund von Gärvorgängen des Teigmaterials aufgehen, sondern auch dadurch, daß aus der Teigschicht austretende Feuchtigkeit von der Füllungsschicht am Austreten gehindert wird. Die Füllungsschicht wirkt hierbei als Dampfsperre. Da die Feuchtigkeit deshalb nicht aus ihrer Teigschicht hinaus kann, sondern darin eingeschlossen ist, unterstützt sie zusätzlich das Aufgehen des Teigs. Dadurch entsteht im Ergebnis ein luftiger, gut aufgegangener Teig. Eine Schwierigkeit bei der Herstellung von Backstücken aus gezogenem Teig besteht nun darin, daß der gezogene Teig empfindlich in der Handhabung ist, insbesondere gegenüber dem Ausüben von Druck. Zur Herstellung von gefüllten Backstücken ist es jedoch unerläßlich, die Backstücke an ihren Rändern zusammenzudrücken, um die Füllung am Auslaufen aus dem Backstück zu hindern. Dabei besteht die Gefahr, daß die Schichtstruktur des gezogenen Teigs beschädigt wird, mit entsprechend negativen Folgen für das Backergebnis. Im Bäckerhandwerk ist es daher zur Schonung der empfindlichen Schichtstruktur des Teigs üblich, das Teigmaterial sanft mit den einzelnen Fingern der Hände zusammenzudrücken.

Bei aus offenkundiger Vorbenutzung bekannten Teigformmaschinen werden hingegen üblicherweise einfache Druckrollen verwendet, um das Teigmaterial zusammenzudrücken. Durch die Druckrollen wird aber in den von ihnen beaufschlagten Bereichen des Teigs die empfindliche Schichtstruktur zerstört. Zumindest in diesen Bereichen geht der Teig beim Backen nicht richtig auf. Das ist unerwünscht.

Der Erfindung liegt die Aufgabe zugrunde, eine Teigformmaschine der eingangs genannten Art zu schaffen, bei der die durch das Zusammendrücken verursachten Beschädigungen in der Schichtstruktur des Teigmaterials verringert sind.

Die erfindungsgemäße Lösung liegt in einer Vorrichtung mit den Merkmalen des Anspruchs 1 und ferner in einem Verfahren mit den Merkmalen des Anspruchs 9. Vorteilhafte Weiterbildungen ergeben sich aus den Unteransprüchen.

Erfindungsgemäß ist bei einer Teigformmaschine für Backstücke aus einem Teigmaterial, das mindestens zwei Teigschichten und eine dazwischen liegende Füllungsschicht umfaßt, mit einer Arbeitsfläche zum Auflegen des Teigmaterials, einer Druckrolle zum Zusammendrücken von einer oder mehreren Lagen des Teigmaterials und Antriebsmitteln zum Erzeugen einer Relativbewegung zwischen der Arbeitsfläche und der Druckrolle vorgesehen, daß die Druckrolle auf ihrer Umfangsfläche Vertiefungen und Erhebungen aufweist, die in Umfangsrichtung abwechselnd nacheinander angeordnet sind. Im Betrieb bewegt sich die Druckrolle über die Arbeitsfläche mit dem darauf angeordneten Teigmaterial, so daß abwechselnd Vertiefungen und Erhebungen mit dem Teigmaterial in Kontakt treten und auf dieses Druck ausüben. Dabei ist der auf das Teigmaterial ausgeübte Druck nicht konstant, sondern ist entsprechend dem Auftreten von Erhebungen bzw. Vertiefungen moduliert. Liegt die Druckrolle gerade im wesentlichen mit dem Bereich einer Erhebung auf, so wird der maximale Druck auf das Teigmaterial ausgeübt. Liegt die Druckrolle mit dem Bereich einer Vertiefung auf dem Teigmaterial auf, so wird ein geringerer Druck auf das Teigmaterial ausgeübt.

Die Erfindung hat erkannt, daß durch den von der erfindungsgemäßen Druckrolle modulierten Druck auf das Teigmaterial einerseits ein ausreichend großer Druck zum Zusammendrücken der einen oder mehreren Lagen des Teigmaterials ausgeübt wird. Zugleich wird erreicht, daß die von der Druckrolle verursachten Beschädigungen der mehrschichtigen Struktur des Teigmaterials verringert sind. Das liegt daran, daß der von den Vertiefungen der Druckrolle auf das Teigmaterial ausgeübte Druck nur so groß ist, daß Beschädigungen der mehrschichtigen Struktur verhindert werden. Entsprechend dem Verhältnis der Vertiefungen zu den Erhebungen an der Umfangsfläche der Druckrolle finden sich also in dem Teigmaterial Zonen mit unbeschädigter Schichtstruktur, nämlich dort, wo die Druckrolle mit ihren Vertiefungen auf das Teigmaterial einwirkte und Bereiche, in denen ein zum Zusammendrücken ausreichender höherer Druck ausgeübt wurde, nämlich dort, wo die Druckrolle mit ihren Erhebungen auf das Teigmaterial einwirkte. In den letzteren Bereichen können zwar Beschädigungen der mehrschichtigen Struktur des Teigmaterials auftreten, jedoch sind sie stets nur von geringer räumlicher Ausdehnung und von jeweils zwei Bereichen mit unbeschädigter Schichtstruktur benachbart. Damit ist das Verhalten des Teigs hinsichtlich des Aufgehens beim Backen insgesamt nicht oder nur wenig beeinträchtigt. Das liegt daran, daß in den Bereichen mit unbeschädigter Schichtstruktur das Aufgehen des Teigmaterials nicht beeinträchtigt ist und sogar dafür ausreicht, den benachbarten Bereich mit möglicherweise beschädigter Schichtstruktur soweit mitzunehmen, daß sich insgesamt noch ein gleichmäßiges Aufgehergebnis ergibt. Der Kern der Erfindung liegt also darin, die im Prinzip nahezu unvermeidliche Beschädigung der Schichtstruktur klein zu halten und derart anzuordnen, daß sie stets von Bereichen mit unbeschädigter Füllungsschicht benachbart sind. Dadurch nehmen die unbeschädigten Bereiche beschädigte Bereiche beim Aufgehen sozusagen mit, so daß das gewünschte Ergebnis erreicht wird.

Außerdem kann die erfindungsgemäße Druckrolle schmaler ausgeführt sein als herkömmliche Druckrollen mit zylindrischer Umfangsfläche. Denn eine schmale Ausführung der Druckrolle bedeutet, daß der Druck, mit dem die Druckrolle auf das Teigmaterial einwirkt, erhöht sein muß, um dieselbe Kraft zum Zusammendrücken des Teigmaterials zu erhalten. Mit herkömmlichen Druckrollen mit zylindrischer Umfangsfläche war dies nicht möglich, da durch den erhöhten Druck die Schichtstruktur des Teigmaterials zerstört würde. Demgegenüber erlaubt die erfindungsgemäße Druckrolle eine entsprechende Steigerung des Drucks, da durch die erfindungsgemäße Ausgestaltung der Umfangsfläche mit Vertiefungen und Erhebungen die schädigenden Einwirkungen auf die Schichtstruktur des Teigmaterials minimiert sind.

Zweckmäßigerweise sind die Vertiefungen und Erhebungen als eine Wellenstruktur ausgebildet. Zwar ist es grundsätzlich unerheblich, welche Form die Vertiefungen und Erhebungen aufweisen, jedoch ist eine wellenförmige Struktur mit ihren Rundungen einer Struktur mit eckigen Konturen überlegen. Bei letzteren bestünde wegen der eckigen Konturen die Gefahr, daß durch die Ecken Druckspitzen in dem Teigmaterial verursacht werden, die zu erheblichen Beschädigungen der Schichtstruktur führen könnten. Außerdem besteht bei einer Wellenstruktur weniger die Gefahr, daß an ihr Teigreste kleben bleiben und damit die Vertiefungen zusetzen als bei einer eckigen Struktur. Dies gilt insbesondere für die Vertiefungen. Hierbei hat es sich als besonders zweckmäßig herausgestellt, wenn die Vertiefung kreisbogenartig geformt ist.

Vorteilhafterweise weist die Erhebung eine flache Oberseite auf. Da eine flache Oberseite gegenüber einer gerundeten oder sonstwie erhabenen Oberseite keine Spitze aufweist, kann damit auch das Auftreten der schädlichen Druckspitzen in dem Teigmaterial vermindert werden.

Zweckmäßigerweise weisen die Erhebungen an ihren stirnseitigen Rändern jeweils eine Abrundung auf. Auf diese Weise wird ein zu abrupter Übergang zwischen dem Bereich des Teigmaterials, der von der Druckrolle mit Druck beaufschlagt wird, und dem daneben liegenden Bereichen des Teigmaterials vermieden. Der Übergang zwischen diesen Bereichen erfolgt damit weicher, wodurch die Gefahr eines Ausbreitens von Beschädigungen in der Druckzone in angrenzende Bereiche des Teigmaterials verringert wird.

Vorzugsweise sind eine Mehrzahl von Druckrollen über die volle Breite der Arbeitsfläche mit einem Abstand von 1 bis 8 cm angeordnet, vorzugsweise 4 bis 6 cm. Damit kann die gesamte Arbeitsfläche ausgenutzt werden, um die Backstücke in mehreren parallelen, nebeneinander liegenden Reihen herzustellen. Durch diese Vielzahl von Reihen kann, da die gesamte Breite der Arbeitsfläche ausgenutzt wird, eine hohe Produktionsleistung der Teigformmaschine erreicht werden.

Vorteilhafterweise ist in Arbeitsrichtung gesehen hinter der Druckrolle ein gesondertes Schneidrad vorgesehen, das fluchtend mit der Druckrolle angeordnet ist. Die Anordnung des Schneidrads genau in der Flucht der Druckrolle ermöglicht es, den Teig genau in der Mitte des Bereichs zu schneiden, der von der Druckrolle zusammengedrückt worden ist. Damit ist sichergestellt, daß in dem Bereich der durch den Schnitt entstehenden Ränder der Backstücke die Schichten bzw. Lagen des Teigmaterials zusammengedrückt sind, um ein Auslaufen von Füllmaterial zu verhindern. Da durch die fluchtende Anordnung des Schneidrads mit der Druckrolle sichergestellt ist, daß genau in der Spur der Druckrolle, d. h. in dem von ihr mit Druck beaufschlagten Bereich, geschnitten wird, kann der mit Druck zu beaufschlagende Bereich des Teigmaterials schmal gewählt werden. Dies bedeutet, daß die Druckrolle selbst recht schmal ausgeführt sein kann. Dank der erfindungsgemäßen Ausgestaltung der Umfangsfläche der Druckrolle kann die Druckrolle schmaler ausgeführt sein, als es dies bisher im Stand der Technik möglich war. Damit kann nicht nur die Breite des Bereichs des Teigmaterials verringert werden, der von der Druckrolle zusammengedrückt wird, wodurch sich die für Füllungen nutzbare Breite für jede der Reihen des Teigmaterials erhöht. Alternativ kann auch die Breite der Reihen vermindert werden. Das hat den Vorteil, daß eine größere Anzahl von Reihen auf derselben Breite der Arbeitsfläche produziert werden können; auch besteht die Möglichkeit, die Breite der einzelnen Reihe zu verringern, um so besonders kleine Backstücke herzustellen.

Zweckmäßigerweise ist in Arbeitsrichtung gesehen vor der Druckrolle eine Benetzungseinrichtung vorgesehen, die fluchtend mit der Druckrolle angeordnet ist. Die Benetzungseinrichtung dient dazu, in den Fällen, wenn zwei Lagen von Teigmaterial miteinander verbunden werden sollen, auf die untere Lage in dem Bereich der vorgesehenen Verbindung ein Verbindungsmittel, wie z. B. Glucosesirup, aufzubringen. Durch das Verbindungsmittel wird in Verbindung mit einem nachfolgendem Zusammendrücken der Lagen des Teigmaterials durch die Druckrolle eine besonders gute Verbindung der beiden Lagen erreicht. Die Anordnung der Benetzungseinrichtung genau in der Flucht der Druckrolle ermöglicht einen zielgenauen und sparsamen Einsatz des Verbindungsmittels und trägt dazu bei, den mit Verbindungsmittel benetzten Bereich des Teigmaterials schmal zu halten und ermöglicht damit ebenfalls eine Verringerung der Breite der einzelnen Reihen und damit eine Erhöhung der Reihenzahl bei gegebener Breite der Arbeitsfläche.

Die Erfindung erstreckt sich auch auf ein Verfahren zum Verbinden von einer unteren und einer oberen Lage Teigmaterials, das mindestens zwei Teigschichten mit einer dazwischen liegenden Füllungsschicht umfaßt, mit den Schritten: Aufbringen von Verbindungsmittel auf die untere Lage des Teigmaterials an vorgesehenen Verbindungsstellen, Auflegen der oberen Lage des Teigmaterials, und Rollen der Lagen in den Bereich der Verbindungsstellen unter Verwendung einer Druckrolle mit einer Vertiefungen und Erhebungen aufweisenden Umfangsfläche. Wie bereits vorstehend beschrieben, wird dabei vorzugsweise mittels einer Benetzungseinrichtung das Verbindungsmittel auf die untere Lage des Teigmaterials aufgebracht, die obere Lage aufgelegt und schließlich die vorgesehenen Verbindungsstellen zwischen der unteren und der oberen Lage des Teigmaterials von der Druckrolle zusammengedrückt. Aufgrund der Erhebungen und Vertiefungen auf der Umfangsfläche der Druckrolle werden dabei die durch das Zusammendrücken des Teigmaterials hervorgerufenen Beschädigungen der Schichtstruktur minimiert.

Die Erfindung wird nachfolgend unter Bezugnahme auf die Zeichnungen, welche ein vorteilhaftes Ausführungsbeispiel der Erfindung darstellen, genauer beschrieben. Es zeigen:
- Fig. 1: eine Seitenansicht einer erfindungsgemäßen Teigformmaschine;
- Fig. 2: eine Aufsicht auf die Arbeitsfläche der erfindungsgemäßen Teigformmaschine;
- Fig. 3: eine Seitenansicht sowie eine Schnittansicht einer erfindungsgemäßen Druckrolle;
- Fig. 4: eine Aufsicht auf einen Teil der Teigformmaschine mit Druckrollen und Schneidrädern; und
- Fig. 5: eine Seitenansicht der Anordnung nach Fig. 4.

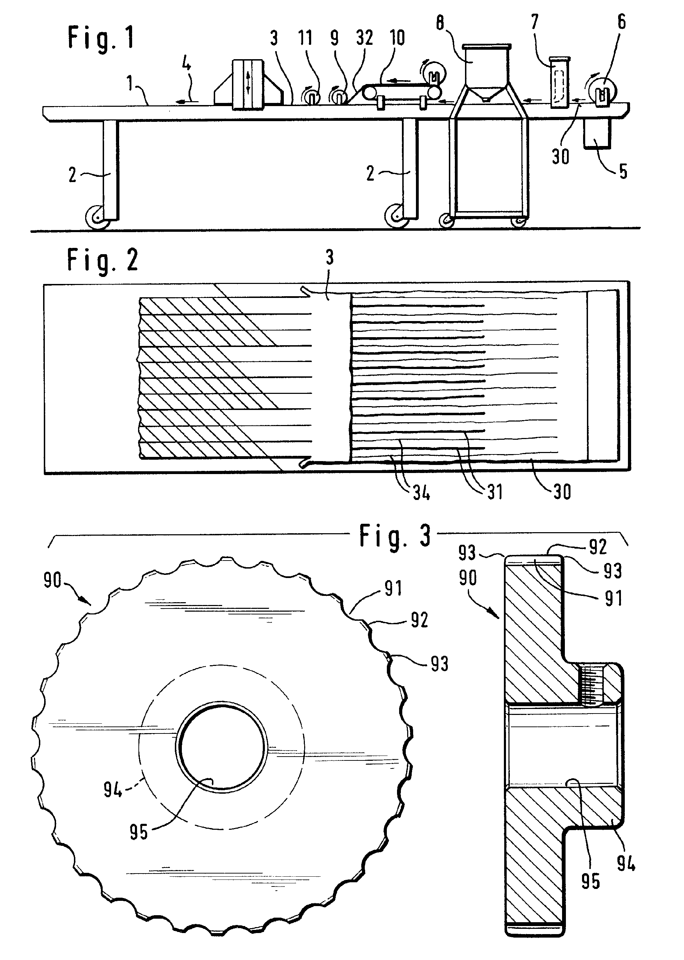

In Fig. 1 ist ein Ausführungsbeispiel einer erfindungsgemäßen Teigformmaschine dargestellt. Die Teigformmaschine umfaßt eine Arbeitsfläche 1 auf einem Gestell 2. Die Arbeitsfläche 1 ist beweglich als ein Förderband ausgebildet, das von einer Antriebseinrichtung 5 in einer Arbeitsrichtung, die durch den Pfeil 4 symbolisiert ist, in Bewegung gesetzt wird. An einem in Bezug auf die Arbeitsrichtung 4 stromaufwärts gelegenen Ende der Teigformmaschine ist eine Abwickeleinrichtung 6 für eine untere Lage 30 des Teigmaterials, das in seiner Gesamtheit mit der Bezugsziffer 3 bezeichnet ist, angeordnet. Bei dem Teigmaterial handelt es sich um gezogenen Teig, wie er insbesondere für Klein- und Feingebäck mit Vorteil verwendet wird. In Arbeitsrichtung 4 stromabwärts ist eine Benetzungseinrichtung 7 angeordnet. Sie dient dazu, auf die untere Teiglage 30 an den Stellen, die zum Verbinden mit einer oberen Teiglage 32 vorgesehen sind, Glucosesirup als Verbindungsmittel aufzubringen. Weiter in Arbeitsrichtung 4 stromabwärts schließt sich eine Füllmaterialaufbringeinrichtung 8 an. Diese dient dazu, eine Mehrzahl von Füllmassestreifen 31 parallel zueinander auf die untere Lage 30 des Teigmaterials aufzubringen. Die Füllmassestreifen 31 liegen dabei etwa in der Mitte zwischen den mit Verbindungsmittel benetzten Streifen 34. Weiter in Arbeitsrichtung 4 stromabwärts schließt sich daran eine Zuführeinrichtung 10 für die obere Lage 32 des Teigmaterials an. Diese führt die obere Lage 32 des Teigmaterials von oben auf die untere Lage 30 mit den Füllmassestreifen 31 und den Verbindungsmittelstreifen 34 zu.

Damit ist das Teigmaterial für die herzustellenden Backstücke komplettiert. Es besteht aus einer unteren Lage 30, parallelen Reihen mit darauf angeordneten Füllmassestreifen 31 sowie einer oberen Lage aus Teigmaterial 32. Die Lagen 30, 32 des Teigmaterials weisen eine mehrschichtige Struktur auf. Sie bestehen aus mindestens zwei Teigschichten und einer dazwischen liegenden Füllungsschicht. Ein solcher Teig mit einer solchen Struktur wird auch als gezogener Teig bezeichnet. Beispiele für gezogenen Teig sind z. B. Blätterteig oder Plunderteig.

Das Teigmaterial 3 muß in Reihen entsprechend der Anzahl der Füllmassestreifen 31 geschnitten werden. Zum Schneiden ist eine Schneideinrichtung 11 vorgesehen. Jedoch kann das Teigmaterial nicht ohne weiteres in den Bereichen zwischen den Füllmassestreifen 31 durchgeschnitten werden, da es dann zu einem Austreten von Teilen des Füllmaterialstreifens 31 aus dem von der Schneideinrichtung 11 geschnittenen Rändern des Teigmaterials 3 käme. Es ist daher erforderlich, vor dem Schneiden die Bereiche des Teigmaterials, in denen die Schneideinrichtung 11 das Teigmaterial 3 schneidet, zusammenzudrücken. Durch das Zusammendrücken wird die untere Lage 30 mit der oberen Teiglage 32 so verbunden, daß ein Austreten von Teilen des Füllmassestreifens 31 verhindert ist. Dafür ist stromaufwärts der Schneideinrichtung 11 eine Druckeinrichtung 9 vorgesehen.

Die Druckeinrichtung 9 umfaßt mehrere auf einer Welle 99 angeordnete Druckrollen 90. Eine genauere Darstellung der Druckrolle 90 ist in Fig. 3 wiedergegeben. Die Druckrolle 90 weist eine Umfangsfläche auf, die mit Vertiefungen 91 sowie Erhebungen 92 versehen ist. In dem dargestellten Ausführungsbeispiel sind die Vertiefungen 91 kreisbogenartig ausgeführt. Die Erhebungen 92 weisen eine flache Oberseite auf. Ferner weisen die Erhebungen 92 an ihren stirnseitigen Rändern Abrundungen 93 auf. An einer Stirnseite der Druckrolle 90 ist eine Nabe 94 mit einer Durchgangsbohrung 95 zur Aufnahme der Welle 99 angeordnet.

Die Druckrolle 90 besteht aus einem lebensmitteltauglichen und verschleißfestem Material, wie bspw. Edelstahl. Üblicherweise haben die Druckrollen 90 einen Durchmesser von etwa 60 bis 150 mm, bewährt hat sich ein Durchmesser von etwa 120 mm. Eine solche Druckrolle 90 ist im Maßstab 1 : 2 in Fig. 3 dargestellt. Die kreisbogenartige Vertiefung 91 folgt dabei der Kontur eines Kreises mit einem Radius von etwa 4 bis 8 mm, vorzugsweise 6 mm. Die Abrundung 93 folgt der Kontur eines Kreises von etwa 3 mm. Die Vertiefungen 91 und Erhebungen 92 sind abwechselnd etwa äquidistant angeordnet. Bewährt hat sich, die Vertiefungen mit einem Abstand von etwa 12 mm anzuordnen, so daß bei einem Durchmesser von 120 mm sich 30 Vertiefungen ergeben. Zweckmäßigerweise sind es zwischen 20 und 40 Vertiefungen. Die Druckrolle 90 weist in ihren äußeren Bereichen, also außerhalb des Bereichs der Nabe 94, eine Dicke von etwa 20 mm auf.

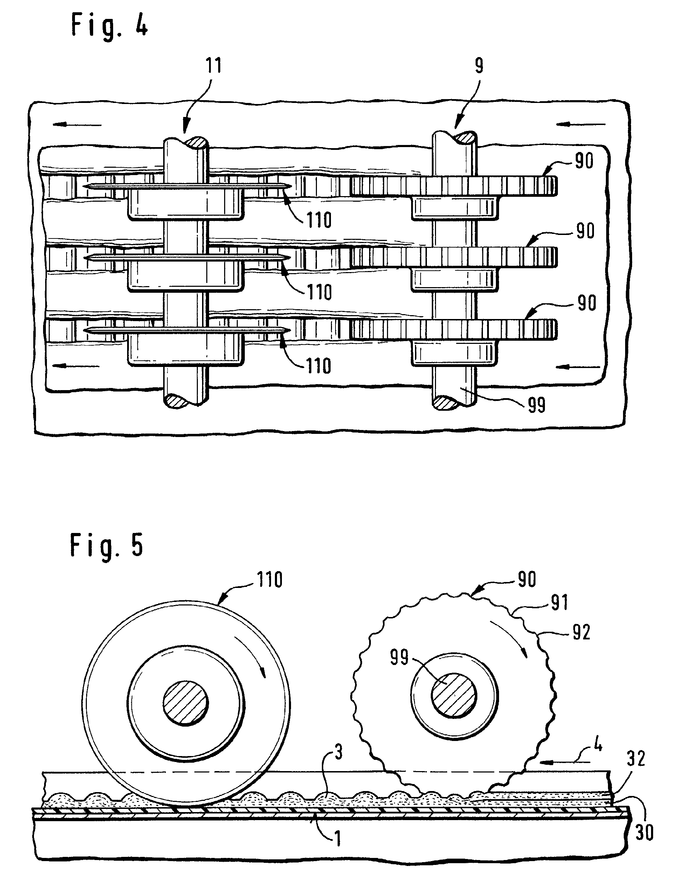

In den Fig. 4 und 5 ist der Betrieb der Druckeinrichtung 9 mit den Druckrollen 90 sowie der Schneideinrichtung 11 mit den Schneidrädern 110 dargestellt. In Fig. 4 ist gut zu erkennen, daß die Schneidräder 110 fluchtend mit den Druckrollen 90 angeordnet sind, so daß das Schneiden der Schneidräder 110 genau in der Mitte der Spur der Druckrollen 90 erfolgt. Das Zusammenwirken der Druckrollen 90 mit dem Teigmaterial 3 ist in Fig. 5 detaillierter dargestellt. Der in Fig. 5 ganz rechts dargestellte Bereich des Teigmaterials 3 mit seiner unteren Lage 30 und seiner oberen Lage 32 bewegt sich auf der Arbeitsfläche 1 in Arbeitsrichtung 4 stromabwärts auf die Druckrolle 90 zu. In dem Bereich unterhalb der Druckrolle 90 kommt die Druckrolle 90 in Kontakt mit dem Teigmaterial 3 und übt damit Druck auf dieses aus. Die Erhebungen 92 und die Vertiefungen 91 der Druckrollen 90 sind bezogen auf das zu verarbeitende Teigmaterial 3 und den Abstand der Welle 99 von der Arbeitsfläche 1 so bemessen, daß der zwischen der Druckrolle 90 und der Arbeitsfläche 1 verbleibende Zwischenraum in dem Bereich der Erhebungen 92 kleiner und in dem Bereich der Vertiefungen 91 zumindest teilweise größer ist als die gemeinsame Dicke der unteren Lage und der oberen Lage 30, 32 des Teigmaterials 3. Damit wird erreicht, daß die Druckrolle 90 im wesentlichen nur in den Bereichen, in denen die Erhebungen 92 in Kontakt mit dem Teigmaterial 3 treten, Druck auf das Teigmaterial 3 ausübt; während in den Bereichen der Vertiefungen 91 nur wenig oder gar kein Druck auf das Teigmaterial 3 ausgeübt wird. Dadurch bleibt die empfindliche Schichtstruktur des Teigs in den Teiglagen 30, 32 zumindest in dem Bereich der Vertiefungen 91 erhalten. Andererseits ist das Zusammendrücken in dem Bereich der Erhebungen 92 ausreichend stark, um mit dem an diesen Stellen zwischen der unteren Lage 30 und der oberen Lage 32 aufgebrachten Verbindungsmittel 34 für eine ausreichend sichere Verbindung der beiden Lagen 30, 32 zu sorgen. Damit ist sichergestellt, daß nach dem Schneiden durch die Schneidräder 110 an den dadurch entstehenden Schnitträndern Füllmaterial austritt. Zwar kommt es in dem Bereich der Erhebungen 92 in der Regel zu Beschädigungen der Schichtstruktur des Teigmaterials 3, jedoch führt dies nicht zur Beeinträchtigung des Aufgehverhaltens des Teigmaterials, da erfindungsgemäß die durch die Erhebungen 92 beschädigten Stellen in der Schichtstruktur des Teigmaterials örtlich begrenzt sind und von jeweils unbeschädigten Stellen, die in dem Bereich der Vertiefungen 91 lagen, benachbart sind. Beim Aufgehen ziehen damit die unbeschädigten Stellen die beschädigte Stelle sozusagen mit nach oben und gewährleisten somit ein gleichmäßiges Aufgehen des gesamten druckbeaufschlagten Bereichs.

## Patentansprüche

1. Teigformmaschine für Backstücke aus einem Teigmaterial (3), das mindestens zwei Teigschichten und eine dazwischen liegende Füllungsschicht umfaßt, mit einer Arbeitsfläche (1) zum Auflegen des Teigmaterials (3), einer Druckrolle (90) zum Zusammendrücken von einer oder mehreren Lagen (30, 32) des Teigmaterials (3) und Antriebsmitteln (5) zum Erzeugen einer Relativbewegung zwischen der Arbeitsfläche (1) und der Druckrolle (90), **dadurch gekennzeichnet, daß** die Druckrolle (90) auf ihrer Umfangsfläche Vertiefungen (91) und Erhebungen (92) aufweist, die in Umfangsrichtung abwechselnd nacheinander angeordnet sind.

2. Teigformmaschine nach Anspruch 1, **dadurch gekennzeichnet, daß** die Vertiefungen (91) und die Erhebungen (92) als Wellenstruktur ausgebildet sind.

3. Teigformmaschine nach Anspruch 1 oder 2, **dadurch gekennzeichnet, daß** die Vertiefung (91) kreisbogenartig geformt ist.

4. Teigformmaschine nach einem der Ansprüche 1 bis 3, **dadurch gekennzeichnet, daß** die Erhebung (92) eine flache Oberseite aufweist.

5. Teigformmaschine nach einem der Ansprüche 1 bis 4, **dadurch gekennzeichnet, daß** die Erhebung (92) an ihren stirnseitigen Rändern jeweils eine Abrundung (93) aufweist.

6. Teigformmaschine nach einem der Ansprüche 1 bis 5, **dadurch gekennzeichnet, daß** eine Mehrzahl von Druckrollen (90) zur Bearbeitung des Teigmaterials in mehreren Reihen über die volle Breite der Arbeitsfläche (1) mit einem Abstand von 1 bis 8 cm, vorzugsweise 4 bis 6 cm angeordnet ist.

7. Teigformmaschine nach einem der Ansprüche 1 bis 6, **dadurch gekennzeichnet, daß** in Arbeitsrichtung (4) gesehen hinter der Druckrolle (90) ein gesondertes Schneidrad (110) vorgesehen ist, das fluchtend mit der Druckrolle (90) angeordnet ist.

8. Teigformmaschine nach einem der Ansprüche 1 bis 7, **dadurch gekennzeichnet, daß** in Arbeitsrichtung gesehen vor der Druckrolle (90) eine Benetzungseinrichtung (7) vorgesehen ist, die fluchtend mit der Druckrolle (90) angeordnet ist.

9. Verfahren zum Verbinden von einer unteren (30) und einer oberen (32) Lage Teigmaterials (3), das aus mindestens zwei Teigschichten und einer dazwischen liegenden Füllungsschicht besteht, mit den Schritten:
- Aufbringen von Verbindungsmittel auf die untere Lage (30) des Teigmaterials (3) an vorgesehenen Verbindungsstellen (34),
- Auflegen der oberen Lage (32) des Teigmaterials (3), und
- Rollen der Lagen (30, 32) in dem Bereich der Verbindungsstellen (34) unter Verwendung einer Druckrolle (90) mit einer Vertiefungen (91) und Erhebungen (92) aufweisenden Umfangsfläche.
